# EUROPÄISCHE PATENTANMELDUNG

(11) **EP 1 277 616 A1**
(43) Veröffentlichungstag der Anmeldung: **22.01.2003**
(21) Anmeldenummer: 02015626.1
(22) Anmeldetag: 16.07.2002
(51) Int. Cl.: B60Q 3/02, B60J 7/00

(54) **Schiebedach für ein Fahrzeug**

(30) Priorität: 17.07.2001 DE 10134641
(71) Anmelder: ArvinMeritor GmbH, 63128 Dietzenbach (DE)
(72) Erfinder: Becher, Thomas, 63110 Rodgau (DE); Böhm, Horst, 60599 Frankfurt/Main (DE); Hinterwäller, Dieter, 55122 Mainz (DE); Imgram, Bardo, 63500 Seligenstadt (DE); Röder, Joachim, 63165 Mühlheim (DE); Roeren, Erik, Lake Orion, Michigan 48360 (US); Sommer, Volker, 65388 Schlangenbad-Bärstadt (DE); Stehning, Kai, 61250 Usingen (DE)
(74) Vertreter: Kitzhofer, Thomas, Dipl.-Ing.

(57) **Zusammenfassung**

Ein Schiebedach für ein Fahrzeug hat einen verstellbaren Deckel (10) zum Öffnen und Schließen des Fahrzeugdachs. Am Deckel (10) ist eine elektrische Lichtquelle (10) befestigt.

## Beschreibung

Die Erfindung betrifft ein Schiebedach für ein Fahrzeug, mit einem verstellbaren Deckel zum Öffnen und Schließen einer Dachöffnung.

Ein derartiges Schiebedach ist aus der DE 199 02 244 A1 bekannt. Dabei wird ein unterhalb des Glasdeckels verschiebbarer Schiebehimmel mit einer Flächenleuchte versehen, um eine dezente, den Fahrer nicht blendende Innenraumbeleuchtung zu schaffen. Es besteht nämlich der Wunsch, den Innenraum bei Nachtfahrten geringfügig zu beleuchten, um beispielsweise Bedienelemente besser zu erkennen, wobei aber die Beleuchtung sich nicht in den Scheiben spiegeln und den Fahrer nicht blenden darf. Ein Schiebehimmel ist üblicherweise eine sehr leichte, in einen Aufnahmeraum schiebbare Platte aus Kunststoff oder verpreßten Faserwerkstoffen, die selbst und deren Führung möglichst leicht und einfach ausgestattet sein sollte. Durch die Anordnung eines Leuchtmittels müssen jedoch erhöhte Anforderungen an den Schiebehimmel gestellt werden, damit das Leuchtmittel nicht vibriert.

Die Erfindung schafft ein Schiebedach mit integrierter Beleuchtung, bei dem die Vibrationsneigung der Lichtquelle sowie der Aufwand zu deren Unterbringung sehr gering sind. Dies wird bei einem Schiebedach der eingangs genannten Art dadurch erreicht, daß am Deckel selbst eine elektrische Lichtquelle befestigt ist. Der stabile, die Außenhaut des Fahrzeugs schließende bewegliche Deckel ist ohnehin mit einer sehr stabilen Führung versehen und in sich stabil ausgeführt, so daß kein erhöhter Aufwand getrieben werden muß, um die Vibrationsneigung zu reduzieren. Die Innenraumbeleuchtung kann gegebenenfalls so schwach eingestellt werden, daß sie auch während der Fahrt eingeschaltet bleiben kann und für ein angenehmes Raumgefühl sorgt.

Gemäß einer Ausführungsform ist die Lichtquelle eine am Deckel befestigte, flächige Lichtquelle, beispielsweise eine Elektrolumineszenz-Lichtquelle, wie sie bei Digitaluhren als Hintergrundbeleuchtung eingebaut sind. In der US 4 775 964 und den darin erwähnten Patenten sind solche extrem dünnen, flächigen Leuchtmittel beschrieben. Einzelne starke Lichtquellen blenden sehr leicht oder spiegeln sich in den Scheiben, weshalb ein flächiger Lichtaustritt nicht nur ein angenehmeres, sondern auch ein für die Ausleuchtung des Innenraums geeigneteres Licht zur Verfügung stellt.

Darüber hinaus kann die Lichtquelle wenigstens eine Glühlampe, eine LEDoder eine Gasentladungslampe sein.

Ferner wird vorgesehen, daß ein Lichtleiter sich entlang wenigstens eines Abschnitts des Randes des Deckels erstreckt und Licht vorzugsweise in Richtung einwärts des Randes abgibt. Durch diese Anordnung des Lichtleiters wird das Licht in einer horizontalen Ebene abgegeben, die über dem Insassen liegt und nicht oder nur geringfügig schräg abwärts abstrahlt, so daß es nicht zum Blenden des Fahrers führt. Es ergibt sich eine Art indirekte Beleuchtung, bei der punktförmige Lichtquellen vorgesehen sind, deren Licht aber über den oder die Lichtleiter großflächig abgestrahlt wird.

Die Lichtleiter sind z.B. Lichtwellenleiter oder Plexiglaskörper.

Der Deckel hat gemäß der bevorzugten Ausführungsform eine innenseitig am Rand des Deckels vorgesehene Hinterschäumung oder Hinterspritzung, an oder in der die Lichtquelle oder ein Lichtleiter bevorzugt angeordnet sein können. Die Hinterschäumung oder Hinterspritzung bildet beispielsweise einen wulstartigen, innenseitigen Rahmen, dessen seitlich einwärts weisende Fläche eine Lichtaustrittsfläche aufweist. Die Lichtaustrittsfläche kann als umlaufendes Lichtband ausgeführt sein, z.B. indem das Lichtband oder der Lichtleiter innenseitig am Rahmen geführt und in die Hinterschäumung oder Hinterspritzung eingebettet ist.

Auch die Lichtquelle ist vorzugsweise in der Hinterschäumung oder Hinterspritzung angeordnet, was auf sehr einfache Weise dadurch erfolgen kann, daß ein entsprechender Aufnahmeraum beim Hinterschäumen oder Hinterspritzen ausgespart wird.

Die bevorzugte Ausführungsform der Erfindung sieht vor, daß der Deckel ein Glasdeckel ist.

Die Platte aus Glas kann gegebenenfalls beschichtet oder innenseitig so aufgerauht sein, daß sie ein erhöhtes Reflektionsvermögen des Lichtes aus der Lichtquelle in Richtung Innenraum hat, verglichen mit einer entsprechenden Platte ohne Beschichtung oder innenseitige Aufrauhung. Diese Ausführungsform berücksichtigt, daß das Licht sehr nahe an der Glasplatte und am Rand derselben die Lichtquelle oder den Lichtleiter verläßt, so daß der Einfallswinkel in bezug auf die Innenseite der Glasplatte extrem flach sein kann und kaum Licht nach unten reflektiert wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein Fahrzeugdach mit integriertem Schiebedach nach der Erfindung,
- Figur 2 eine perspektivische Unteransicht des Deckels eines Schiebedachs gemäß einer ersten Ausführungsform,

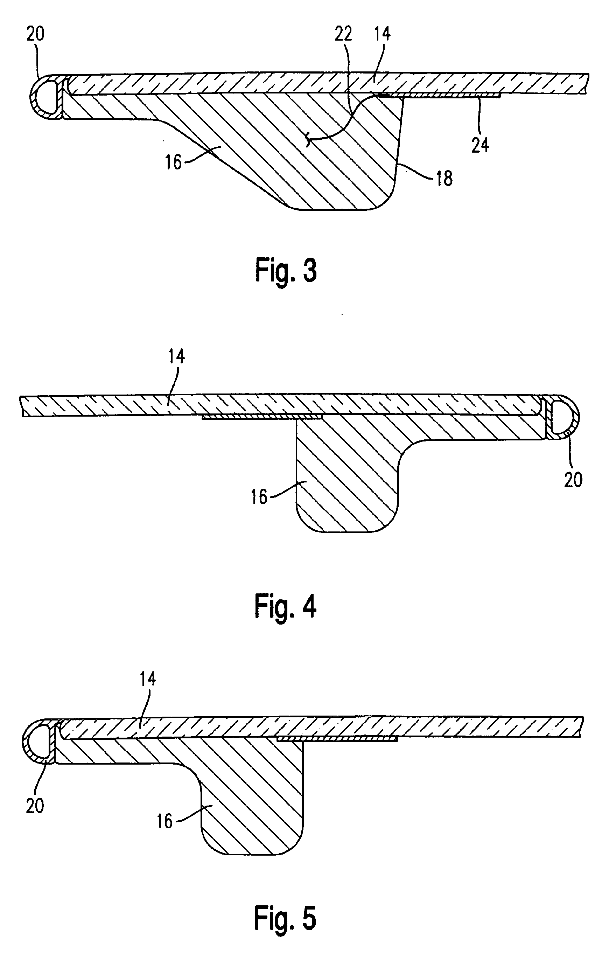

- Figur 3 einen Schnitt durch den Deckelrand längs der Linie III-III in Figur 2,
- Figur 4 einen Schnitt durch den Deckelrand längs der Linie IV-IV in Figur 2,
- Figur 5 einen Schnitt durch den Deckelrand längs der Linie V-V in Figur 2,
- Figur 6 eine perspektivische Unteransicht eines Deckels eines erfindungsgemäßen Schiebedachs gemäß einer zweiten Ausführungsform,
- Figur 7 einen Schnitt durch den Deckelrand längs der Linie VII-VII in Figur 6,
- Figur 8 einen Schnitt durch den Deckelrand längs der Linie VIII-VIII in Figur 6,
- Figur 9 einen Schnitt durch den Deckelrand längs der Linie IX-IX in Figur 6,
- Figur 10 eine perspektivische Unteransicht des Deckels eines erfindungsgemäßen Schiebedachs gemäß einer dritten Ausführungsform,
- Figur 11 einen Schnitt durch den Deckelrand längs der Linie XI-XI in Figur 10,
- Figur 12 einen Schnitt durch den Deckelrand längs der Linie XII-XII in Figur 10 und
- Figur 13 einen Schnitt durch den Deckelrand längs der Linie XIII-XIII in Figur 10.

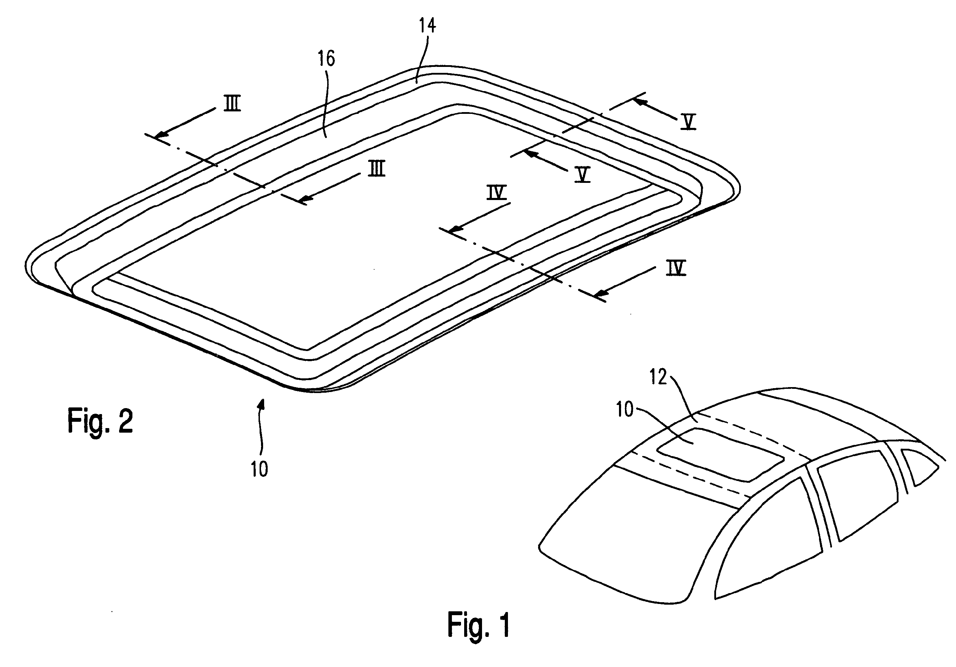

In Figur 1 ist ein Schiebedach eines Fahrzeugs gezeigt, das einen verstellbaren Deckel 10 und einen den Deckel umgebenden, mit unterbrochenen Linien begrenzten Rahmen aufweist, der Führungen für den Deckel 10 besitzt. Durch Öffnen und Schließen des Deckels 10 kann das Fahrzeugdach, genauer gesagt die Öffnung im Schiebedach geöffnet oder geschlossen werden, um den Fahrzeuginnenraum optional zu belüften.

Der in Figur 2 gezeigte Deckel ist als Glasdeckel ausgeführt, mit einer außenseitigen, die Außenhaut der Fahrzeugkarosserie schließenden Glasplatte 14, die über den gesamten Rand, d.h. geschlossen umlaufend, innenseitig hinterschäumt oder hinterspritzt ist. Mit dem Bezugszeichen 16 ist die Hinterschäumung oder Hinterspritzung bezeichnet, die eine Art wulstartigen, innenseitigen Rahmen bildet und eine seitlich einwärts weisende, geschlossen umlaufende Fläche 18 aufweist, die nahezu 90° zur Innenseite der Glasplatte verläuft Die Hinterschäumung 16, z.B. PU-Schaum, steht gegenüber dem seitlichen Umfangsrand der Glasplatte 14 etwas über, und am seitlichen Umfangsrand der Hinterschäumung 16 ist eine Hohlprofildichtung 20 zur Abdichtung des Deckels vorgesehen.

In der Hinterschäumung 16 ist eine elektrische Leitung 22 eingebettet, die zu einer flächigen Lichtquelle 24 führt, die den von innen sichtbaren Rand der Glasplatte 14 ringförmig umgibt, an der Glasplatte 14 befestigt und foliendünn ausgebildet ist. Die Lichtquelle 24 ist beispielsweise eine sogenannte Elektrolumineszenz-Lichtquelle.

Die flächige Lichtquelle 24 ist eine angenehme, blendfreie Lichtquelle, die ein angenehmes Raumgefühl vermittelt. Indem die Lichtquelle 24 unmittelbar an die innenseitige, wulstartige Hinterschäumung 16 angrenzt, wird ihre Strahlung durch die Fläche 18 in Richtung Windschutzscheibe abgeschirmt, so daß sie sich für den Fahrer auch nicht in der Windschutzscheibe spiegelt.

Die folgenden Ausführungsformen ähneln teilweise der bislang beschriebenen Ausführungsform, so daß für funktionsgleiche Teile die bereits eingeführten Bezugszeichen übernommen werden.

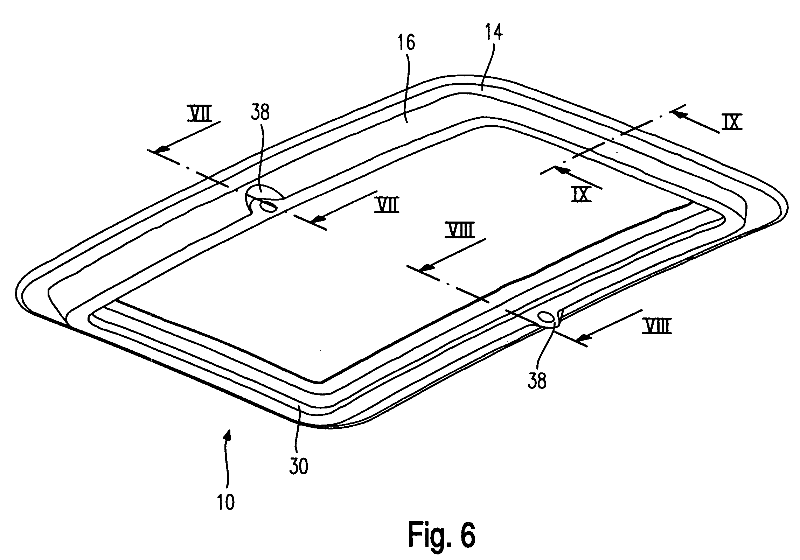

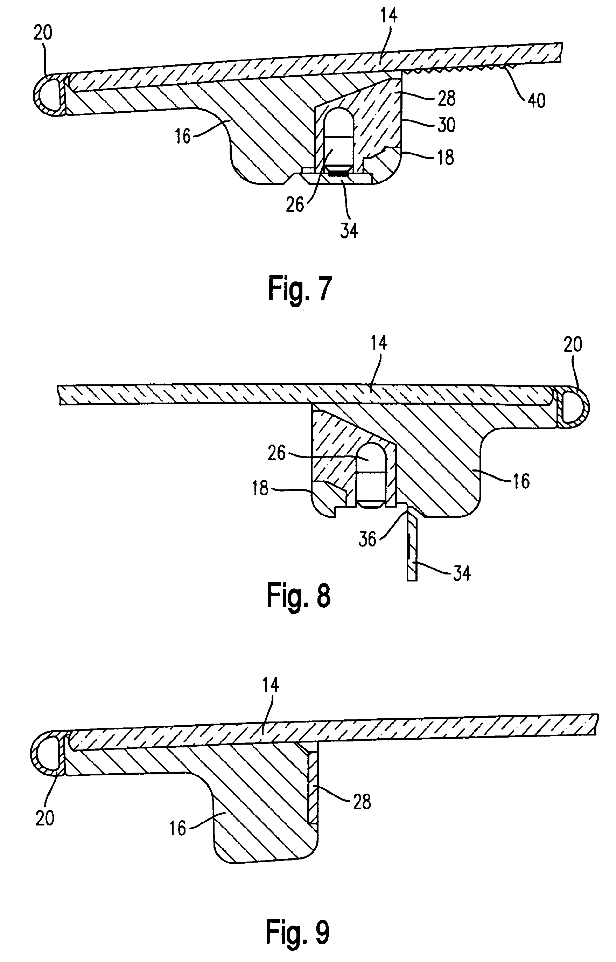

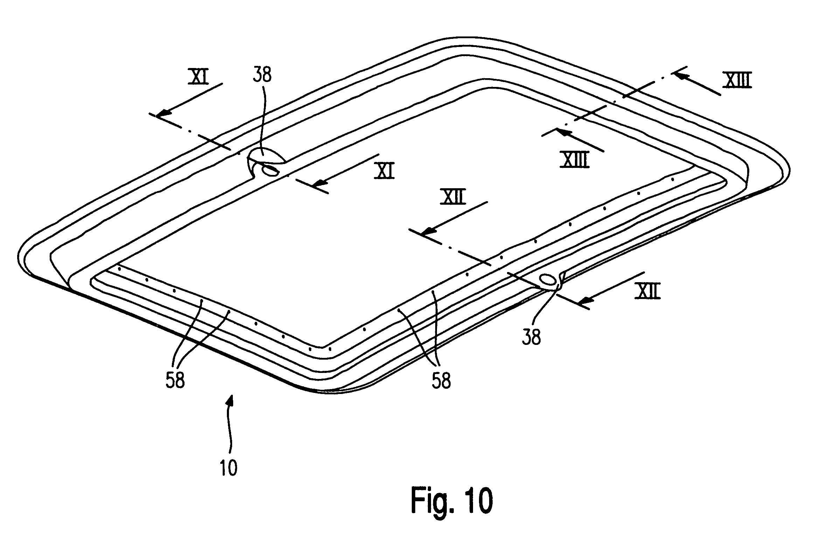

Bei der Ausführungsform nach den Figuren 6 bis 9 sind zwei Lichtquellen 14 in Form von Glühlampen 26 oder entsprechenden Gasentladungslampen in der Hinterschäumung 16 untergebracht. Ein Lichtleiter in Form eines ringförmigen Plexiglaskörpers 28 wird beim Hinterschäumen der Glasplatte 14 in die Hinterschäumung 16 eingebettet. Der Plexiglaskörper 28 bildet einen Teil der seitlich einwärts weisenden Fläche 18, wobei dieser Teil als Lichtaustrittsfläche 30 bezeichnet wird, die im wesentlichen im rechten Winkel zur Glasplatte 14 steht. Es entsteht ein geschlossenes Lichtband, welches abhängig vom Plexiglaskörper 28 nach innen, vorzugsweise in einer horizontalen Ebene abstrahlt. Im Plexiglaskörper 28 sind den Abmaßen der Glühlampen 26 entsprechende Aufnahmekammern für die Glühlampen 26 ausgebildet. Zum Auswechseln der Glühlampen 26 ist je eine Klappe 34 vorgesehen, die durch ein Filmscharnier 36 einstückig mit der Hinterschäumung 16 verbunden ist, also einen Teil derselben bildet. In Figur 8 ist die Klappe 34 in geöffnetem Zustand dargestellt. An der Klappe selbst ist ein Kontakt (nicht gezeigt) vorgesehen, der für die Stromzufuhr zu der Glühlampe 26 sorgt. Die Hinterschäumung 16 hat im Bereich der Glühlampen 26 entsprechende Ausbuchtungen 38, wie in Figur 10 zu sehen ist, um die Unterbringung des in diesem Bereich vergrößerten Plexiglaskörpers 28 zu ermöglichen.

In Figur 9 ist zu erkennen, daß der Plexiglaskörper 28 entfernt von den Glühlampen 26 relativ dünn ausgebildet sein kann.

Der Plexiglaskörper 28 kann auch aus mehreren Einzelteilen zusammengesetzt sein, die Segmente des durchgehenden Ringes bilden.

Da über den Plexiglaskörper 28 auch die Glasplatte 14 innenseitig beleuchtet wird, kann die entsprechende Innenfläche auch zur Reflektion des auftreffenden Lichtes verwandt werden. Zur Verbesserung der Reflektion nach unten ist die Glasplatte 14 innenseitig beschichtet oder aufgerauht, wobei der entsprechende beschichtete oder innenseitig aufgerauhte Abschnitt mit den Bezugszeichen 40 versehen ist.

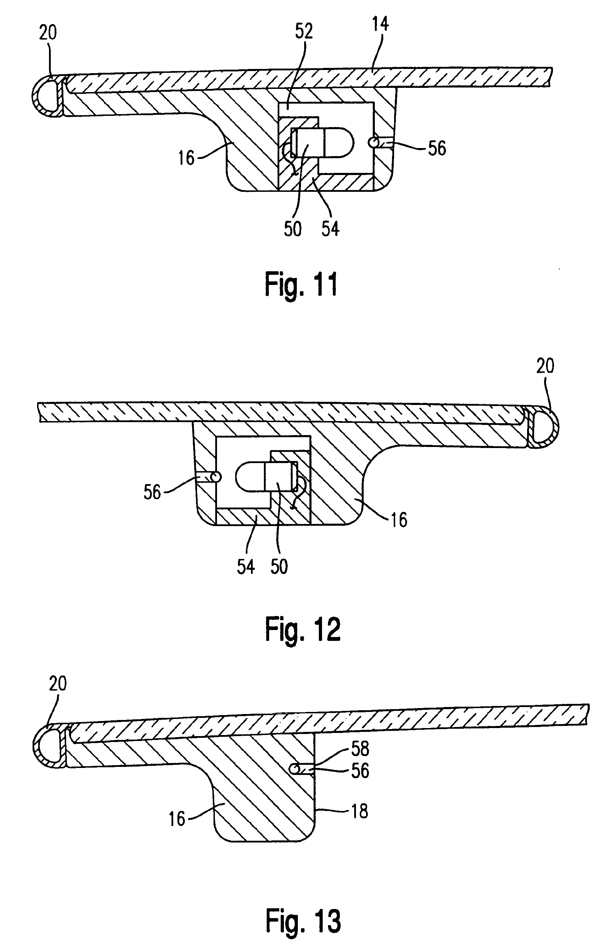

Bei der Ausführungsform nach den Figuren 10 bis 13 sind zwei LED's 50 in einem Hohlraum 52 in den Ausbuchtungen 38 untergebracht, wobei die LED's in Kunststoffpfropfen 54 eingebettet sind, die in die Hohlräume 52 von unten gesteckt werden. Die LED's 50 strahlen einen Lichtleiter in Form eines Lichtwellenleiters 56 an, der zahlreiche Enden besitzt, die punktförmige Lichtaustrittsflächen 58 an der seitlichen, einwärts weisenden Fläche 18 bilden. Die punktförmigen Lichtaustrittsflächen 58 sind in Figur 10 zu erkennen, sie bilden ein unterbrochenes, umlaufendes Lichtband. Der Lichtwellenleiter 56 wird beim Hinterschäumen in die Hinterschäumung 16 eingebettet.

Zu betonen ist, daß bei jeder Ausführungsform anstatt der Hinterschäumung 16 auch eine entsprechende Hinterspritzung in gleicher Geometrie vorgesehen sein kann.

## Patentansprüche

1. Schiebedach für ein Fahrzeug, mit
einem verstellbaren Deckel (10) zum Öffnen und Schließen des Fahrzeugdachs,
**dadurch gekennzeichnet, daß** am Deckel (10) wenigstens eine elektrische Lichtquelle (24) befestigt ist.

2. Schiebedach nach Anspruch 1, **dadurch gekennzeichnet, daß** die Lichtquelle (24) eine flächige Lichtquelle ist.

3. Schiebedach nach Anspruch 2, **dadurch gekennzeichnet, daß** die flächige Lichtquelle (24) eine Elektrolumineszenz-Lichtquelle ist.

4. Schiebedach nach Anspruch 1, **dadurch gekennzeichnet, daß** die Lichtquelle eine Glühlampe (26), eine LED (50) oder eine Gasentladungslampe ist.

5. Schiebedach nach Anspruch 4, **dadurch gekennzeichnet, daß** ein Lichtleiter sich entlang wenigstens eines Abschnitts des Randes des Deckels (10) erstreckt.

6. Schiebedach nach Anspruch 5, **dadurch gekennzeichnet, daß** der Lichtleiter ein Lichtwellenleiter (56) oder ein Plexiglaskörper (28) ist.

7. Schiebedach nach Anspruch 5 oder 6, **dadurch gekennzeichnet, daß** der Deckel (10) eine innenseitige, am Rand des Deckels (10) vorgesehene Hinterschäumung (16) oder Hinterspritzung aufweist.

8. Schiebedach nach Anspruch 7, **dadurch gekennzeichnet, daß** die Hinterschäumung (16) oder Hinterspritzung einen wulstartigen, innenseitigen Rahmen bildet, dessen seitliche, einwärts weisende Fläche (18) eine Lichtaustrittsfläche (30; 56) aufweist.

9. Schiebedach nach Anspruch 8, **dadurch gekennzeichnet, daß** die Lichtaustrittsfläche (30; 56) als umlaufendes Lichtband ausgebildet ist.

10. Schiebedach nach Anspruch 9, **dadurch gekennzeichnet, daß** das Lichtband durch einen Lichtleiter gebildet ist.

11. Schiebedach nach einem der Ansprüche 7 bis 9, **dadurch gekennzeichnet, daß** in der Hinterschäumung (16) oder Hinterspritzung die Lichtquelle untergebracht ist und/oder der Lichtleiter eingebettet ist.

12. Schiebedach nach einem der vorhergehenden Ansprüche, **dadurch gekennzeichnet, daß** der Deckel (10) ein Glasdeckel ist.

13. Schiebedach nach Anspruch 12, **dadurch gekennzeichnet, daß** die außenseitige Glasplatte des Deckels (10) so beschichtet oder innenseitig aufgerauht ist, daß sie ein erhöhtes Reflektionsvermögen des Lichtes aus der Lichtquelle gegenüber einer entsprechenden, nicht beschichteten bzw. innenseitig nicht aufgerauhten Glasplatte aufweist.
